Europäisches Patentamt

European Patent Office

Office européen des brevets

(19)

(11) Publication number: **0 224 289**
**B1**

(12) **EUROPEAN PATENT SPECIFICATION**

(45) Date of publication of patent specification: **31.01.90**

(21) Application number: **86201889.2**

(22) Date of filing: **28.10.86**

(51) Int. Cl.⁵: **A 23 B 7/04,** F 25 D 13/06,
A 23 L 3/36

(54) **Fluidizing apparatus for freezing solid foodstuff pieces in particle form.**

(30) Priority: **04.11.85 NL 8503012**

(43) Date of publication of application:
**03.06.87 Bulletin 87/23**

(45) Publication of the grant of the patent:
**31.01.90 Bulletin 90/05**

(84) Designated Contracting States:
**AT BE CH DE ES FR GB GR IT LI LU NL SE**

(56) References cited:
**WO-A-82/01762**
**DE-A-2 017 876**
**FR-A-2 083 443**
**GB-A- 884 346**
**GB-A-1 418 334**
**GB-A-2 116 304**
**NL-A- 278 749**
**US-A-3 242 974**

(73) Proprietor: **GRASSO'S KONINKLIJKE**
**MACHINEFABRIEKEN N.V.**
**P.O. Box 275**
**NL-5201 AG 's-Hertogenbosch (NL)**

(72) Inventor: **Verhoef, Hermanus Johan Nicolaas**
**Coba Pulskensstraat 9**
**NL-5224 JD s-Hertogenbosch (NL)**

(74) Representative: **van der Beek, George Frans, Ir.**
**et al**
**Nederlandsch Octrooibureau Scheveningseweg**
**82 P.O. Box 29720**
**NL-2502 LS 's-Gravenhage (NL)**

Courier Press, Leamington Spa, England.

## Description

The invention relates to a fluidizing apparatus for freezing solid foodstuff pieces, such as parts of root vegetables, cauliflower, onions, leeks, peppers, and the like, which comprises an elongate, substantially extending box provided at one end with an inlet for a cooled pressurized gas, such as cooled air, while space is provided on the box for the incoming foodstuff pieces which are to be frozen, and the top wall of the box is permeable to the cooled gas.

An apparatus of this kind is known from Dutch Patent Application No. 278,749 and can be used for deep-freezing all kinds of foodstuff pieces which by a static method it is difficult or impossible to deep-freeze because during the freezing they adhere to one another and to the support.

Rings of onion or leeks or pieces of peppers are for example particularly liable to freeze fast to one another.

In order to achieve a continuous movement of the foodstuff pieces over the box, in the known apparatus it is usual for at least the perforated top wall of the box to be in the form of a vibrating or shaking conveyor or of a conveyor belt permeable to air.

This obviously makes the construction complicated and energy-consuming.

The invention seeks to provide a fluidizing apparatus which can operate without a vibrating or shaking action and in which even difficultly fluidizable products can be conveyed and deep-frozen without freezing fast to one another.

According to the invention this is achieved in that a freely rotatable valve is disposed in the box, about halfway along the length of the latter, to bring about pulsation, upstream and downstream of the valve, of the pressurized gas passing out of the top wall of the box, whereby the top wall of the box has a thickness of about 1,5 to 3 mm and the perforations in the top wall have a diameter of about 4 to 2 mm.

Because of the presence of the freely rotatable valve in the box and the chosen dimensions, different air pressures are alternately produced upstream and downstream of the valve during the rotation of the latter, so that the food pieces behave differently upstream and downstream of the valve.

Upstream of the valve the food pieces can thus move upwards away from the top wall, which is permeable to air, of the box, while downstream of the valve they can move downwards, these movements taking place alternately.

In this way the food pieces are effectively separated from one another and will move over the permeable top wall of the box without vibrating or shaking movements being necessary.

It may be observed that a rotating valve is known from GB—B—2,116,304. In that case the valve is not installed in the box itself, but in a bypass channel.

The cooled air can thus pass through the permeable top wall of the box without passing through the valve. Although this is not stated in this publication, this valve is moreover driven and is therefore not freely rotatable. Further nothing is said about the dimensions.

The axis of rotation of the valve is preferably situated substantially in the plane of the bottom of the box, in an opening therein, substantially at right angles to the longitudinal direction of the box, while the valve is so constructed that it substantially closes the opening in two of its rotational positions.

In this way the pulsations upstream and downstream of the valve are given a maximum value.

The invention will be explained more fully with the aid of one example of embodiment and with reference to the drawings, in which:

Figure 1 is a longitudinal section through the apparatus according to the invention,

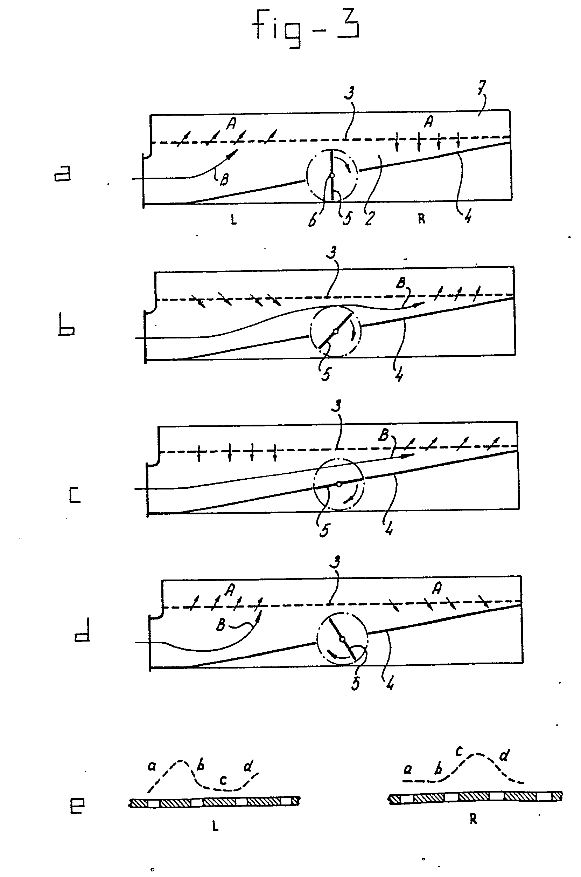

Figure 2 is a section on the line II—II in Figure 1, and

Figure 3 illustrates schematically the movement of the foodstuff particles in various positions of the valve.

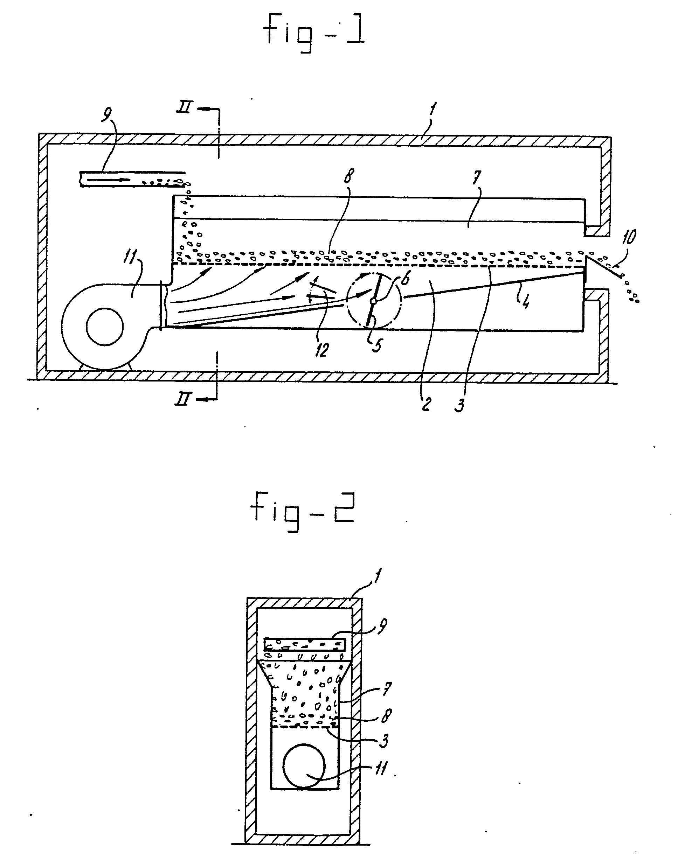

In Figure 1 the thermally insulated casing is designated 1. In the interior of this casing 1 is disposed the fluidizing apparatus according to the invention. This fluidizing apparatus consists of an elongate box 2 which extends substantially horizontally and whose top wall 3 is perforated. The bottom 4 of the box 2 is inclined. This bottom 4 is provided with a rectangular opening in which is disposed a freely rotatable valve 5 which is free to rotate about a horizontal axis of rotation 6 lying approximately in the plane of the bottom 4.

The longer sides of the perforated top wall 3 are provided with upstanding longitudinal walls 7, so that a space is formed to receive foodstuff particles, designated 8, which are to be frozen.

These walls 7 also extend under the top wall 3 to the bottom 4. On one side of the top wall 3 is disposed a feed device 9 for the foodstuff particles which are to be frozen, while on the other side a discharge device 10 for the frozen foodstuff particles is disposed.

A fan 11 is connected to the left-hand end of the box 2, and with its aid cooled air or other gas is passed to the box 2. This air is moving through the box 2 and is moving outwards through the perforations in the top wall 3 into the space enclosed by the casing 1 and after passing through conventional refrigeration means (not shown) the air is recycled to the fan 11.

Adjusting vanes 12 are disposed upstream of the valve 6 in the box 2 in order to enable the direction and speed of rotation of the valve 6 to be changed.

Figure 3 illustrates the apparatus schematically, and the small arrows A indicate the direction of movement of the foodstuff particles during one revolution of the valve 5. The paths of the foodstuff particles in the portions of the box 2 to the left and right of the valve 5 are shown in Figure 3e. The large arrow B indicates the main direction of flow of the air.

By judicious selection of the perforations in the wall 3 it is possible to ensure both freezing and conveying over the perforated top wall 3 without mechanical conveying means being necessary. The freely rotating valve 5, which is rotated by the current of air, ensures alternating pressure differences to the left and to the right of the valve, as the result of which the foodstuff particles make the movements indicated.

Selection of the diameter of the holes and the thickness of the wall 3 enables the current of air passing out of the holes to be so directed that the desired conveying speed and direction and the density of the fluidized bed of foodstuff particles will be adapted to the nature of the foodstuff pieces and the freezing time required.

The wall 3 can thus have a thickness of for example 3 mm, with perforations in it of a diameter of for example 2 mm. The substantially horizontal current of air B in the box 2 will then move practically vertically upwards in the holes, because the perforations have a length of 3 mm with a diameter of 2 mm.

The foodstuff particles which are to be frozen will remain suspended above a wall of this kind, but will scarcely move horizontally. A thick turbulent layer will thus lie above the wall 3.

In order to avoid congestion, such as occurs for example with potato slices or pepper rings, it may be necessary to give the air a more horizontal direction above the wall 3. This is possible by providing at the place where no turbulence occurs, for example above the valve 5, a very thin wall, for example with a thickness of 1.5 mm, in which large perforations of a diameter of 3 or 4 mm are provided.

The air jets passing out of the perforations in a sharply horizontal direction wil ensure that the pieces are blown apart and conveyed in the direction of the current of air. For all kinds of products which are to be frozen it is thus possible to select a suitable wall with a determined thickness and a determined hole diameter, or an alternation of suitable wall portions, so as to ensure that the foodstuff pieces remain sufficiently long in the current of air to be completely frozen without adhering to or being caught in one another.

In addition to the diameter of the holes and the thickness of the top wall 3, the direction of the air in the box also determines the degree of conveyance of the food pieces on the top wall 3. For this purpose the direction of the air in the box 2 should be substantially horizontal over the entire length and at right angles to the freely rotating valve 5. The direction B of the air differs from the horizontal because the bottom 4 of the box 2 extends obliquely upwards in the direction of flow, so that the path of flow for the air narrows. The narrowing is such that the mean horizontal velocity component of the air remains approximately the same over the entire length of the box 2. The purpose of this is to ensure that with the same hole diameter and the same thickness of the top wall 3 over the entire length of the box 2 the outlet velocity of the air passing out of the holes will be the same.

In Figure 3e the paths of movement of the food particles on the left and on the right of the valve 5 in the positions of the valve 5 shown in Figures 3a, 3b, 3c and 3d are shown.

## Claims

1. Fluidizing apparatus for freezing solid foodstuff pieces such as parts of root vegetables, cauliflowers, onions, leeks, peppers, and the like, which comprises an elongate, substantially horizontally extending box (2) provided at one end with an inlet for a cooled pressurized gas, such as cooled air, while space is provided on the box (2) for the incoming foodstuff pieces which are to be frozen, and the top wall (3) of the box (2) is permeable to the cooled gas, characterized in that a freely rotatable valve (5) is disposed in the box (2), about halfway along the length of the latter, to bring about pulsation, upstream and downstream of the valve, of the pressurized gas passing out of the top wall (3), whereby the top wall (3) of the box (2) has a thickness of about 1,5 to 3 mm and the perforations in the top wall (3) have a diameter of about 4 to 2 mm.

2. Apparatus according to claim 1, characterized in that the axis of rotation (6) of the valve (5) is situated substantially in the plane of the bottom (4) of the box (2), in an opening therein, substantially at right angles to the longitudinal direction of the box (2), while the valve (5) is so constructed that it substantially closes the opening in two of its rotational positions.

3. Apparatus according to claim 2, which has a substantially horizontal top wall (3) of the box (2), characterized in that the bottom (4) of the box (2) is inclined upwards in the direction of conveyance of the foodstuff pieces.

4. Apparatus according to claims 1, 2 or 3, characterized in that the valve (5) extends over practically the entire width of the box (2).

5. Apparatus according to claims 1, 2, 3 or 4, characterized in that one or more adjustable guide vanes (12) is or are disposed upstream of the valve (5) in the box (2) in order to enable the direction and/or speed of rotation of the valve (5) to be adjusted.

## Patentansprüche

1. Fluidfördervorrichtung zum Einfrieren fester Lebensmittelstücke wie Teilen von Wurzelgemüsen, Blumenkohl, Zwiebeln, Lauch, Pfefferschoten u. dgl. mit einem länglichen, sich im wesentlichen horizontal erstreckenden Kasten (2), der an einem Ende mit einem Einlaß für gekühltes, unter Druck stehendes Gas, wie z.B. gekühlter Luft, versehen ist, während auf dem Kasten (2) Raum für hereinkommende Lebensmittelstücke, die einzufrieren sind, vorgesehen ist und die Abdeckung (3) des Kastens (2) für das Kühlgas durchlässig ist, dadurch gekennzeichnet, daß ein frei drehbares Ventil (5) im Kasten (2) angeordnet ist, etwa auf halbem Wege entlang der Länge des letzteren, um stromauf und stromab des Ventils eine Pulsation des aus der Abdeckung (3) heraustretenden Druckgases hervorzurufen, wobei die Abdeckung (3) des Kastens (2) eine Dicke von etwa 1,5 bis 3 mm besitzt und die Perforationen in der Abdeckung (3) einen Durchmesser von etwa 4 bis 2 mm haben.

2. Vorrichtung nach Anspruch 1, dadurch gekennzeichnet, daß die Drehachse (6) des Ventils (5) im wesentlichen in der Ebene des Bodens (4) des Kastens (2) in einer darin befindlichen Öffnung, im wesentlichen rechtwinklig zur Längsrichtung des Kastens (2) angeordnet ist, wobei das Ventil (5) so ausgebildet ist, daß es in zwei seiner Drehpositionen die Öffnung im wesentlichen schließt.

3. Vorrichtung nach Anspruch 2, mit einer im wesentlichen horizontalen Abdeckung (3) des Kastens (2), dadurch gekennzeichnet, daß der Boden (4) des Kastens (2) in Förderrichtung der Lebensmittelstücke nach oben geneigt ist.

4. Vorrichtung nach Anspruch 1, 2 oder 3, dadurch gekennzeichnet, daß das Ventil (5) sich praktisch über die gesamte Breite des Kastens (2) erstreckt.

5. Vorrichtung nach Anspruch 1, 2, 3 oder 4, dadurch gekennzeichnet, daß eine oder mehrere einstellbare Leitschaufeln (12) stromauf des Ventils (5) in dem Kasten (2) angeordnet ist bzw. sind, um die Richtung und/oder die Geschwindigkeit der Drehung des Ventils (5) einstellbar zu gestalten.

## Revendications

1. Dispositif fluidisé pour la congélation de pièces d'aliments solides telles que fragments de racines alimentaires, choux-fleurs, oignons, poireaux, piments et analogue, qui comprend un caisson allongé s'étendant sensiblement horizontalement (2), pourvu à une extrémité, d'une entrée de gaz sous pression refroidi, tel que de l'air refroidi, tandis qu'il est ménagé un espace sur le caisson (2) pour les pièces d'aliments entrantes à congeler et que la paroi supérieure (3) du caisson (2) est perméable au gaz refroidi, caractérisé en ce qu'une vanne à rotation libre (5) est disposée dans le caisson (2), à peu près à mi-chemin le long de la longueur de ce dernier, pour engendrer une pulsation du gaz sous pression sortant de la paroi supérieure (3), en amont et en aval de la vanne, dans lequel la paroi supérieure (3) du caisson (2) a une épaisseur de 1,5 à 3 mm environ et les perforations de la paroi supérieure (3) ont un diamètre de 4 à 2 mm environ.

2. Dispositif selon la revendication 1, caractérisé en ce que l'axe de rotation (6) de la vanne (5) est situé sensiblement dans le plan du fond (4) du caisson (2), dans une ouverture ménagée à l'intérieur, sensiblement perpendiculairement à la direction longitudinale du caisson, tandis que la vanne (5) est construite de manière à fermer sensiblement l'ouverture dans deux de ses positions de rotation.

3. Dispositif selon la revendication 2, possédant une paroi supérieure (3) sensiblement horizontale du caisson (2), caractérisé en ce que le fond (4) du caisson (2) est incliné vers le haut dans la direction de transport des pièces d'aliments.

4. Dispositif selon l'une quelconque des revendications 1 à 3, caractérisé en ce que la vanne (5) s'étend pratiquement sur la totalité de la largeur du caisson (2).

5. Dispositif selon l'une quelconque des revendications 1 à 4, caractérisé en ce qu'un ou plusieurs déflecteurs réglables (12) sont disposés dans le caisson (2), en amont de la vanne (5) afin de permettre le réglage de la direction et/ou de la vitesse de rotation de la vanne (5).

EP 0 224 289 B1

## Fig-1

## Fig-2

Fig - 3